# EUROPÄISCHE PATENTANMELDUNG

(11) **EP 4 160 820 A1**
(43) Veröffentlichungstag der Anmeldung: **05.04.2023**
(21) Anmeldenummer: 21200039.2
(22) Anmeldetag: 30.09.2021
(51) Int. Cl.: H01Q 15/14, H01Q 19/18, H01Q 3/46, H04B 7/06, H04B 7/145

(54) **FUNK-KOMMUNIKATIONS-SYSTEM**

(71) Anmelder: Siemens AG Österreich, 1210 Wien (AT)
(72) Erfinder: Die Erfindernennung liegt noch nicht vor
(74) Vertreter: Siemens Patent Attorneys

(57) **Zusammenfassung**

Funk-Kommunikations-System (S), wobei ein Sendesignal (S1) von einem ersten Funk-Modul (TRX1) über einen ersten passiven Reflektor (R1) und über einen zweiten Reflektor (R2) zu zumindest einem zweiten Funk-Modul (TRX2, TRX3) reflektiert wird, wobei der zweite Reflektor (R2) elektronisch steuerbar ist.

## Beschreibung

Die Erfindung betrifft ein Funk-Kommunikations-System.

Die Inbetriebnahme eines Funk-Kommunikations-Systems kann sehr aufwändig und komplex sein, insbesondere wenn es durch die Gegebenheiten vor Ort zu unerwünschten Funkabschattungen oder Mehrwegausbreitungen kommt.

Eine Inbetriebnahme unter derartigen Rahmenbedingungen ist besonders dann aufwändig, wenn sich die Konfiguration über die Zeit ändern kann, da eine Nachjustierung der beteiligten Systeme erforderlich sein kann.

Um dem entgegenzuwirken kann eine steuerbare reflektierende Oberfläche (sogenannte "Reflective Intelligent Surface" oder RIS) eingesetzt werden, mithilfe welcher an deren ReflexionsOberfläche Signale von einem ersten sendenden Teilnehmer in Richtung eines zweiten empfangenden Teilnehmers reflektiert werden.

Typischerweise weist eine RIS eine Vielzahl an einzeln elektronisch steuerbaren Reflektor-Elementen auf.

Jedoch kann eine RIS nur jene Energie weiterleiten, welche an der Oberfläche eingelangt. Je größer die RIS, desto mehr Leistung steht zur Verfügung und desto höhere Signalstärken können beim Empfänger erzeugt werden.

Gleichzeitig kann bei Vergrößerung der RIS die austretende Energie stärker fokussiert werden. Eine Verdoppelung der effektiven Fläche der RIS kann also zu einer Verdoppelung der verfügbaren Leistung und zu einer Verdoppelung der Fokussierungsfähigkeit führen. Die Signalstärke beim Empfänger kann dadurch etwa vervierfacht werden.

Um hinreichend hohe Signalstärken beim zweiten Teilnehmer zu erreichen, wie beispielsweise eine Signalstärke die ähnlich der ist, die bei einer direkten Sichtverbindung vorliegt, muss die effektive Oberfläche der RIS etwa ***Aw***=(***d λ***)/4 sein, wobei ***d*** den gesamten Übertragungsweg und ***λ*** die Wellenlänge beschreibt.

Bei einem Übertragungsweg von 20 m ergibt sich bei 24 GHz eine effektive Fläche in der Größenordnung von 0.063 m², was etwa der Fläche eines Kreises mit 28 cm Durchmesser entspricht.

Auf dieser Oberfläche müssen phasensteuerbare Elemente angeordnet werden, durch deren Steuerung eine Reflexion bzw. fokussierte Weiterleitung der Energie in die gewünschte Richtung erzielt werden kann.

Jedoch liegt für eine sinnvoll realisierbare RIS die Größe der jeweiligen einzelnen Elemente etwas unterhalb einer Wellenlänge, wie beispielsweise 0.7***λ***.

Bei dem zuvor genannten Beispiel sind für eine RIS etwa 800 einzelne Elemente nötig, wobei die hohe Anzahl an Reflektor-Elementen zu einer hohen Komplexität und damit erhöhten Kosten führt.

Die große Fläche der RIS hat aber ein hohes Potential, um die verfügbare Leistung beim Empfänger zu fokussieren und damit die gewünschte Signalstärke zu erzielen.

Andererseits hat eine Reflektor-Fokussierung auch zufolge, dass der beleuchtete Bereich um den Empfänger klein wird.

Der Öffnungswinkel im Richtdiagramm des Reflektors kann im Bereich von wenigen Grad liegen, wie etwa 3° für das vorhergehende Beispiel.

Dies hat zufolge, dass einerseits die Positionen der Teilnehmer sehr genau bekannt sein müssen, beispielsweise auf 20 cm genau.

Andererseits, die RIS bei Bewegung der Teilnehmer mit hoher Rate neu konfiguriert werden muss.

Dies stellt hohe Anforderungen an die Steuerung der RIS, die mechanischen Toleranzen bei Montage und die Genauigkeit der Positionen von RIS und den Funkteilnehmern.

Es ist Aufgabe der Erfindung ein Funk-Kommunikations-System bereitzustellen, welches eine flexible Anordnung von Funk-Modulen erlaubt, und Neukonfiguration und Optimierung der Übertragungseigenschaften auf einfache Weise möglich ist.

Die Aufgabe wird durch ein Funk-Kommunikations-System gelöst, wobei ein Sendesignal von einem ersten Funk-Modul über einen ersten passiven Reflektor und über einen zweiten Reflektor zu zumindest einem zweiten Funk-Modul reflektiert wird, oder von dem zumindest einen zweiten Funk-Modul über den zweiten Reflektor und über den ersten Reflektor zu dem ersten Funk-Modul reflektiert wird, wobei der zweite Reflektor elektronisch steuerbar ist.

Die Erfindung besteht darin, mittels eines ersten passiven Reflektors die vom Sender ankommende Leistung auf eine kleinere, steuerbare zweite Reflektor-Oberfläche zu fokussieren.

Damit kann die Leistungsdichte auf der kleineren Fläche des zweiten Reflektors im Vergleich zur Leistungsdichte, die auf den ersten Reflektor trifft, erhöht werden.

Ein passiver Reflektor weist keine elektronischen Komponenten auf und besteht beispielsweise aus einem elektrisch leitenden Material wie Aluminium, und weist ferner eine Form auf, durch welche beispielweise eine Fokussierung auf einen Punkt erfolgt, wie bei einem parabolischen Satelliten-Spiegel.

Es ist vorteilhaft, wenn die Form des Reflektors so gestaltet ist, dass der zweite Reflektor möglichst gleichmäßig ausgeleuchtet wird und die auf den zweiten Reflektor eintreffenden Signale eine möglichst stabile Phasenlage zueinander haben.

Die RIS als zweiter Reflektor kann auf diese Weise verkleinert werden und kann trotzdem etwa dieselbe Leistung zur Verfügung stellen, wie eine RIS in der Größe des ersten Reflektors.

Der erste Reflektor sollte dabei so ausgeführt werden, dass die ankommende Strahlung nicht auf einen Punkt fokussiert wird, sondern möglichst gleichmäßig auf eine Fläche verteilt wird, welche vollständig von der RIS als zweiter Reflektor eingenommen wird.

Es ist vorteilhaft den Reflektor so zu gestalten, dass sich die Phase über der gewählten Fläche möglichst gleichmäßig verhält.

Es kann beispielsweise aber auch ein einfacher Parabolspiegel zur Anwendung kommen, welcher auf einen Punkt fokussieren, welcher jedoch an entsprechender Position hinter der RIS liegt, so dass die RIS möglichst gleichmäßig beleuchtet wird, wenn sie vorgelagert ist.

Aufgrund der kugelförmigen Phasenfunktion um den Fokuspunkt wird die Phase auf der Oberfläche der RIS nicht ideal sein - also sich über der RIS-Fläche nicht entsprechend einer verkippten ebenen Fläche verhalten - jedoch ist die Abweichung der Phase gut bestimmbar und kann durch geeignete Steuerung der Elemente kompensiert werden.

Durch die erhöhte Leistungsflussdichte, welche durch die Fokussierung erzielt wird, hat jedes Element der RIS mehr Leistung zur Verfügung.

Die einzelnen Beträge der Elemente werden nun mit geeignet eingestellten Phasen wieder abgestrahlt so dass sie sich beim Empfänger konstruktiv überlagern und zu einer hohen Empfangsfeldstärke führen.

Da die RIS dadurch kleiner dimensioniert werden kann und weniger Elemente aufweisen kann, sind die Möglichkeiten für eine Fokussierung der verfügbaren Leistung beim Empfänger jedoch eingeschränkt.

Die Vergrößerung der effektiven Fläche wirkt also nur auf der Seite des passiven Reflektors, nicht aber auf der Seite der RIS. Eine Verdoppelung der effektiven Größe der RIS durch den passiven Reflektor verursacht also auch nur eine Verdoppelung der Leistung beim Empfänger, und nicht wie vorhin eine Vervierfachung.

Andererseits sind die ausgeleuchteten Bereiche auf Seite des Empfängers deutlich größer, und damit ist eine genaue Position der Teilnehmer nicht mehr so kritisch.

Es ist vorteilhaft die Vergrößerung der effektiven Fläche der RIS mittels passiven Reflektors in Richtung der ortsfesten Basisstation zu erzielen, und die Steuerfähigkeit der RIS in Richtung eines mobilen Kommunikationsteilnehmers zu nutzen.

Dadurch wird eine hohe Flexibilität erreicht, dass innerhalb gewisser Grenzen die beiden Reflektoren derart fest zueinander ausgerichtet werden können, dass eine Feinabstimmung über den steuerbaren Reflektor erfolgen kann und durch den ersten Reflektor eine Vergrößerung der Apertur erreicht wird, wodurch die Stärke des empfangenen Signals erhöht werden kann.

Ein Funk-Modul weist typischerweise einen Sender zum Senden eines Funksignals und einen Empfänger zum Empfangen eines Funksignals auf.

In einer Weiterbildung der Erfindung ist es vorgesehen, dass der zweite Reflektor ein planares Reflektor-Array mit einer Vielzahl an Reflektor-Elementen ist, welche vorzugsweise einzeln ansteuerbar sind.

Dadurch kann eine kostengünstige Gesamt-Anordnung erreicht werden. Konventionelle Doppel-Reflektor-Systeme basieren meist auf zwei festen und räumlich geformten Reflektor-Elementen, welche ein starres Empfangsschema aufweisen und unflexible sind, insbesondere für temporär sich ändernde Konfigurationen der Funk-Module.

In einer Weiterbildung der Erfindung ist es vorgesehen, dass der erste und der zweite Reflektor in einer Cassegrain-, einer Torus- oder einer Gregory-Konfiguration angeordnet sind.

Durch Anwendung dieser Reflektor-Elemente kann eine besonders vorteilhafte Systemanordnung hinsichtlich mechanischer Größe, elektrischer Eigenschaften und Kosten geschaffen werden, insbesondere in Kombination mit einem planaren zweiten Reflektor.

In einer Weiterbildung der Erfindung ist es vorgesehen, dass zumindest zwei zweite Funk-Module umfasst sind und der zweite Reflektor durch eine Steuer-Vorrichtung derart konfiguriert ist, dass das Signal zwischen dem ersten Reflektor und den zumindest zwei zweiten Funk-Modulen, welche an verschiedenen Orten angeordnet sind, reflektiert wird.

Dadurch kann erreicht werden, dass Funk-Module, beispielsweise mobile Transceiver, an verschiedenen Orten durch dasselbe Funk-Kommunikations-System beziehungsweise dieselbe Reflektor-Anordnung erreicht werden können.

In einer Weiterbildung der Erfindung ist es vorgesehen, dass der erste Reflektor einen Brennpunkt aufweist, und für den zweiten Reflektor ein Reflektor-Mittelpunkt bestimmbar ist, welcher dem Ursprung eines Reflektor-Richtdiagramms des zweiten Reflektors entspricht und zwischen dem ersten Reflektor und dessen Brennpunkt angeordnet ist.

In Zusammenhang mit der vorliegenden Erfindung ist unter einem Brennpunkt auch ein Fokusbereich eines Reflektors gemeint, in welchem Signale betrags- und phasenmäßig über eine Fläche in diesem Fokusbereich gleichmäßig eintreffen beziehungsweise abgestrahlt werden können.

Der steuerbare zweite Reflektor weist mehrere Reflektor-Elemente auf, welche individuell agieren.

Es ist vorteilhaft, wenn alle einzelnen Reflektor-Elemente betrags- und phasenmäßig möglichst ähnliche Teilsignale empfangen.

Eine Kompensation von Betrags- oder Phasenfehlern in Teilsignalen einzelner Reflektor-Elemente ist durch eine entsprechende Berücksichtigung bei der Bestimmung des jeweiligen Reflexionsfaktors des jeweiligen einzelnen Reflektor-Elements möglich.

Der Ursprung des Reflektor-Richtdiagramms des zweiten Reflektors ergibt sich aus der Reflektor-Konfiguration in Form der Reflexionsparameter einzelner Reflektor-Elemente des Reflektor-Arrays und dem daraus abgeleiteten Antennen-Diagramm.

Der Ursprung des Reflektor-Richtdiagramms, also der Reflektor-Mittelpunkt, kann dem physischen Reflektor-Bauteil örtlich zugeordnet werden, beispielsweise dem geometrischen Mittelpunkt eines planaren Reflektor-Arrays oder allgemein ein entsprechender Ort auf der Oberfläche, auf welcher die Reflektor-Elemente angeordnet sind und welcher den Reflektor virtuell im Raum repräsentiert.

Auf den Ursprung kann ein Antennen- bzw. Reflektor-Gruppen-Diagramm angewandt werden, um beispielsweise ein Reflexionsverhalten des Systems insgesamt zu ermitteln.

Dadurch wird eine besonders einfache Konfigurierbarkeit des Systems erreicht.

In einer Weiterbildung der Erfindung ist es vorgesehen, dass der erste Reflektor einen Brennpunkt aufweist, welcher zwischen dem ersten Reflektor und dem zweiten Reflektor angeordnet ist.

Dadurch wird eine alternative und sehr kompakte Bauform insbesondere für den ersten Reflektor des Systems erreicht.

In einer Weiterbildung der Erfindung ist es vorgesehen, dass die zumindest zwei zweiten Funk-Empfänger gegenseitig durch einen Raumwinkel von zumindest 0.01 Steradiant, bevorzugt zumindest 0.02 Steradiant, besonders bevorzugt zumindest 0.03 Steradiant oder zumindest 0.05 Steradiant, bezüglich des Reflektor-Mittelpunkts des zweiten Reflektors beabstandet angeordnet oder voneinander separiert sind, wobei diese Separation beispielweise einen leeren Kegel beschreibt, welcher die Funk-Empfänger räumlich trennt.

Die Anordnung ist besonders vorteilhaft für entfernt gelegene Funk-Empfänger. Durch den steuerbaren Reflextor ist es möglich, einen Teil des Signals zu einem Funk-Empfänger zu reflektieren, und den anderen Teil des Signals zu dem andern Funk-Empfänger zu reflektieren.

Es kann also während des Betriebs beispielsweise temporär eine Nachverfolgung sich bewegender Funk-Empfänger konfiguriert werden und oder bei statischer Lage zwischen verschiedenen Reflexions-Richtungen für ein Funk-Signal hin- und hergeschaltet werden, um eine temporäre Signalverstärkung zu erreichen.

Die Erfindung wird nachfolgend anhand eines in der beigeschlossenen Zeichnung dargestellten Ausführungsbeispiels näher erläutert.

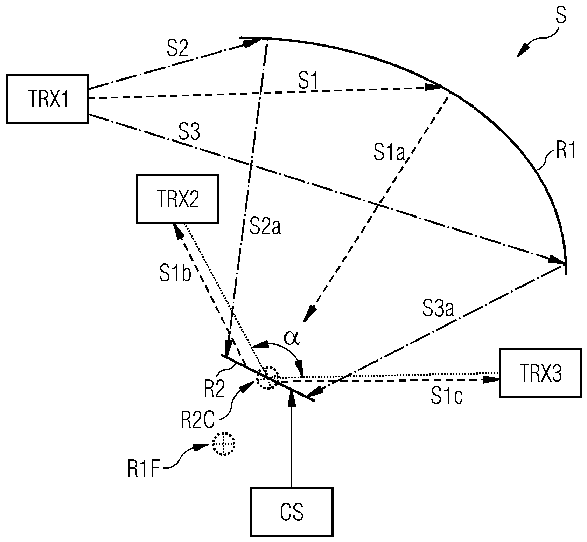

Die Figur zeigt ein Ausführungsbeispiel eine erfindungsgemäße Anordnung für ein Funk-Kommunikations-System S.

Ein Sendesignal S1 wird von einem ersten Funk-Modul TRX1 über einen ersten Reflektor R1 und über einen zweiten Reflektor R2 zu zwei zweiten Funk-Modulen TRX2, TRX3 reflektiert.

Die Funk-Module TRX1-TRX3 können räumlich verteilt angeordnet sein. Daher können zwischen den Komponenten des Systems S räumliche Winkel in den Ausbreitungswegen vorliegen.

Dazu weist das Funk-Modul TRX1 einen Sender zum Senden von Funksignalen S1-S3 und die zwei zweiten Funk-Module TRX2, TRX3 jeweils einen Empfänger zum Empfangen der Signale S1b, S1c auf.

Die Funksignale S1-S3 können beispielsweise von demselben abgestrahlten Signal des Funk-Modulen TRX1 erzeugt worden sein.

Natürlich ist eine Kommunikation über den umgekehrten Signalwerg möglich, nämlich von den zwei zweiten Funk-Modulen TRX2, TRX3 über den zweiten Reflektor R2 und über den ersten Reflektor R1 hin zu dem ersten Funk-Modul TRX1.

Dazu weist das Funk-Modul TRX1 zusätzlich einen Empfänger zum Empfangen eines Funksignals und zumindest eines der zwei zweiten Funk-Module TRX2, TRX3 zusätzlich einen Sender zum Senden eines Funksignals auf.

Der erste Reflektor R1 ist rein passiv, beispielsweise ein elektrisch leitendes Bauteil aus Metall, und weist durch die mechanische Form, wie beispielsweise ein Offset-ParabolSpiegel einen Brennpunkt R1F auf.

Der zweite Reflektor R2 ist elektronisch über eine Steuervorrichtung CS steuerbar und ist beispielsweise als planares Reflektor-Array ausgeführt.

Das planare Reflektor-Array weist einer Vielzahl an Reflektor-Elementen auf, welche vorzugsweise einzeln durch die Steuer-Vorrichtung CS ansteuerbar sind.

Für den zweiten Reflektor R2 ist ein Reflektor-Mittelpunkt R2C bestimmbar, welcher dem Ursprung des Reflektor-Richtdiagramms des zweiten Reflektors R2 entspricht.

Der zweite Reflektor R2 mit dessen Reflektor-Mittelpunkt R2C ist zwischen dem ersten Reflektor R1 und dessen Brennpunkt R1F angeordnet.

Der erste und der zweite Reflektor R1, R2 können beispielsweise in einer Cassegrain-, einer Torus- oder einer Gregory-Konfiguration angeordnet sein.

Es ist besonders günstig, wenn der zweite Reflektor R2 durch die Steuer-Vorrichtung CS derart konfiguriert ist, dass das vom ersten Reflektor R1 reflektierte Signal Sla zu den zumindest zwei zweiten Funk-Modulen TRX2, TRX3 reflektiert wird, welche an verschiedenen Orten angeordnet sind.

Dies gilt auch für die umgekehrte Richtung für ein Funksignal, ausgehend von den zwei sendenden zweiten Funk-Modulen TRX2, TRX3 hin zum empfangenden Funk-Modul TRX1.

Mit anderen Worten bedeutet das, dass das Signal Sla zwischen dem ersten Reflektor R1 und den zwei zweiten Funk-Modulen TRX2, TRX3 reflektiert wird.

Die zwei zweiten Funk-Modulen TRX2, TRX3 sind dabei an verschiedenen Orten angeordnet.

Diese beiden Orte können durch einen Raumwinkel α beschrieben werden, welcher um den Reflektor-Mittelpunkt R2C des zweiten Reflektors R2 zwischen den zwei zweiten Funk-Modulen TRX2, TRX3 gebildet ist.

Signale S1b und S1c können zu den jeweiligen zweiten Funk-Modulen TRX2, TRX3 reflektiert werden, indem die Steuer-Vorrichtung CS den zweiten Reflektor R2 dementsprechend ansteuert.

Wenn die zwei zweiten Funk-Empfänger TRX2, TRX3 gegenseitig durch den Raumwinkel α von zumindest 0.01 sr, bevorzugt zumindest 0.02 sr, besonders bevorzugt zumindest 0.03 sr oder zumindest 0.05 sr beabstandet angeordnet oder voneinander separiert sind, ist die Anordnung besonders effektiv, da auf einfache Weise eine flexible Anordnung in ihrer Funk-Kommunikation optimiert werden kann.

Der Raumwinkel α beschreibt eine räumliche Anordnung der Reflektoren R1 und R2, sowie der Funk-Empfänger TRX1-TRX3 zueinander, und soll für die vorliegende Erfindung einen winkelmäßigen Abstand zwischen zwei Systembestandteilen darstellen.

Die Figur zeigt eine vereinfachte zweidimensionale Projektion einer solchen Anordnung.

Alternativ kann der erste Reflektor R1 einen Brennpunkt aufweisen, welcher zwischen dem ersten Reflektor R1 und dem zweiten Reflektor R2 gelegen ist.

Dadurch können besondere Anforderungen an den ersten Reflektor hinsichtlich Spiegelform berücksichtigt werden, und insgesamt eine besonders kleine Bauform der Reflektor-Anordnung erreicht werden.

Diese Anordnung ist nicht gesondert dargestellt.

### Bezugszeichenliste:

- CS: Steuer-Vorrichtung
- R1: Fester, passiver Reflektor
- R1F: Brennpunkt des ersten Reflektors R1
- R2: planarer, elektronisch steuerbarer Reflektor
- R2C: Reflektor-Mittelpunkt
- S: Funk-Kommunikations-System
- S1a: Sendesignal am festen Reflektor R1 reflektiert
- S1b, S1c: Sendesignal am steuerbaren zweiten Reflektor R2 reflektiert
- S1-S3: Sende-Signal
- TRX1-TRX3: Transceiver

## Patentansprüche

1. Funk-Kommunikations-System (S), wobei ein Sendesignal (S1) von einem ersten Funk-Modul (TRX1) über einen ersten passiven Reflektor (R1) und über einen zweiten Reflektor (R2) zu zumindest einem zweiten Funk-Modul (TRX2, TRX3) reflektiert wird,
**oder** von dem zumindest einen zweiten Funk-Modul (TRX2, TRX3) über den zweiten Reflektor (R2) und über den ersten Reflektor (R1) zu dem ersten Funk-Modul (TRX1) reflektiert wird, **dadurch gekennzeichnet, dass** der zweite Reflektor (R2) elektronisch steuerbar ist.

2. System nach dem vorhergehenden Anspruch, wobei der zweite Reflektor (R2) ein planares Reflektor-Array mit einer Vielzahl an Reflektor-Elementen ist, welche vorzugsweise einzeln ansteuerbar sind.

3. System nach einem der vorhergehenden Ansprüche, wobei der erste und der zweite Reflektor (R1, R2) in einer Cassegrain-, einer Torus- oder einer Gregory-Konfiguration angeordnet sind.

4. System nach einem der vorhergehenden Ansprüche, wobei zumindest zwei zweite Funk-Module (TRX2, TRX3) umfasst sind und der zweite Reflektor (R2) durch eine Steuer-Vorrichtung (CS) derart konfiguriert ist, dass das Signal (S1a) zwischen dem ersten Reflektor (R1) und den zumindest zwei zweiten Funk-Modulen (TRX2, TRX3), welche an verschiedenen Orten angeordnet sind, reflektiert wird.

5. System nach einem der vorhergehenden Ansprüche, wobei der erste Reflektor (R1) einen Brennpunkt (R1F) aufweist, und für den zweiten Reflektor (R2) ein Reflektor-Mittelpunkt (R2C) bestimmbar ist, welcher dem Ursprung des Reflektor-Richtdiagramms des zweiten Reflektors (R2) entspricht und zwischen dem ersten Reflektor (R1) und dessen Brennpunkt (R1F) angeordnet ist.

6. System nach dem vorhergehenden Anspruch, wobei die zumindest zwei zweiten Funk-Empfängern (TRX2, TRX3) gegenseitig durch einen Raumwinkel (a) von zumindest 0.01 sr, bevorzugt zumindest 0.02 sr, besonders bevorzugt zumindest 0.03 sr oder zumindest 0.05 sr, bezüglich des Reflektor-Mittelpunkts (R2C) des zweiten Reflektors (R2) voneinander separiert sind.

7. System nach einem der vorhergehenden Ansprüche 1 bis 4, wobei der erste Reflektor (R1) einen Brennpunkt aufweist, welcher zwischen dem ersten Reflektor (R1) und dem zweiten Reflektor (R2) angeordnet ist.
